# EUROPÄISCHE PATENTSCHRIFT

(11) **EP 1 180 387 B1**
(45) Veröffentlichungstag und Bekanntmachung des Hinweises auf die Patenterteilung: **22.09.2004**
(21) Anmeldenummer: 01117312.7
(22) Anmeldetag: 18.07.2001
(51) Int. Cl.: B01D 29/11, B01D 29/21

(54) **Ringförmiges Filterelement mit einer Vlies-Endscheibe sowie Verfahren zu dessen Herstellung**
Ring shaped filter element with a non-woven end cap and process for the production thereof
Elément filtrant annulaire avec une disque terminal en non-tissé et procédé de sa fabrication

(30) Priorität: 17.08.2000 DE 10040262
(43) Veröffentlichungstag der Anmeldung: 20.02.2002
(73) Patentinhaber: MAHLE Filtersysteme GmbH, 70376 Stuttgart (DE)
(72) Erfinder: Gebert, Hans, 74080 Heibronn (DE); Schneider, Horst, 71336 Waiblingen (DE); Waibel, Hans, 71686 Remsek/Aldingen (DE)
(74) Vertreter: Patentanwalts-Partnerschaft, Rotermund + Pfusch + Bernard

(56) Entgegenhaltungen:
- EP-A- 0 773 052
- EP-A- 0 945 160
- DE-A- 19 813 320
- DE-A- 19 838 401
- DE-U- 9 320 639
- FR-A- 2 791 579

## Beschreibung

Die Erfindung betrifft ein ringförmiges Filterelement mit einer Vlies-Enscheibe nach dem Oberbegriff des Patentanspruchs 1 sowie ein Verfahren zu dessen Herstellung.

Eine solches Filterelement ist bekannt aus EP 0 559 011 A1.

Bei Ringfiltern nach DE 198 13 320 A1 und FR-A-2791579 A1 ist jeweils eine radial dichtende, ringförmige Endscheibe mit zwei Materialbereichen bekannt, von denen der radial nicht dichtende Bereich jeweils aus gegenüber dem dichtenden Material erheblich härterem Material besteht. Das nicht dichtende Material ist insbesondere bei beiden Filtern kein Vlies.

Die ringförmigen Endscheiben bei einem aus DE 198 38 401 A1 bekannten Ringfilter bestehen aus Polyurethan, wobei verschiedene Polyurethan-Zusammensetzungen für den eigentlichen radialen Dichtbereich sowie den übrigen Bereich der jeweiligen Endscheibe eingesetzt werden. Vlies als Material für einen Bereich der Endscheibe ist dort nicht offenbart.

Die Erfindung beschäftigt sich mit dem Problem, den stirnseitigen, radialen Dichtrandbereich eines gattungsgemäßen Filters, mit dem dieser auf ein Anschlußteil dicht aufgesetzt wird, bezüglich der Funktionssicherheit zu verbessern. Bei derart zu verbessernden Ringfilterelementen handelt es sich insbesondere um solche, die in Filter für Kraftstoff und Schmieröl von Verbrennungsmotoren aus Fahrzeugen eingesetzt werden.

Gelöst wird dieses Problem vorrichtungsmäßig durch die Ausführung eines gattungsgemäßen Ringfilterelementes nach den kennzeichnenden Merkmalen des Anspruchs 1 einschließlich einer vorteilhaften Ausgestaltung nach Anspruch 2.

Vorteilhafte Herstellungsverfahren sind Gegenstand der Ansprüche 3 und 4.

Ein dem erfindungsgemäß für den jeweiligen Dichtrand des Filterelementes einzusetzenden Material ähnliches Material wird im Stand der Technik nach DE 44 28 139 A1 und DE 44 41 608 A1 bereits für die Herstellung einer Endscheibe eingesetzt. Nachteilig bei diesen bekannten Ausführungen ist, daß entweder die gesamte Endscheibe aus dem betreffenden Material besteht (DE 44 28 139 A1) oder daß zumindest keine vollständige Materialtrennung zwischen den radial unterschiedlich ausgebildeten Bereichen gegeben ist (DE 44 41 608 A1). Bei DE 44 28 139 A1 ist der Dichtringbereich noch durch das Einbringen eines Zusatzmaterials zu verstärken, um eine ausreichende Dichtwirkung zu erzielen. Gleiches gilt bezüglich DE 44 41 608 A1, da dort die gesamte Endscheibe aus einem gleichen Grundmaterial bestehen soll, das lediglich in dem radial dichtenden Bereich zusätzlich mit einem Material versehen werden soll, das unter Temperatur aufweichbar und in aufgeweichtem Zustand aushärtbar (vulkanisierbar) ist und in ausgehärtetem beziehungsweise vulkanisiertem Zustand elastische Eigenschaften besitzt.

Der Vorteil der Erfindung besteht insbesondere darin, ein gattungsgemäßes Filterelement mit einer Vlies-Endscheibe einerseits wirtschaftlich äußerst günstig herstellen zu können und andererseits durch das Aufbringen der erfindungsgemäßen Dichtung eine äußerst sicher funktionierende Dichtung zu besitzen. Dies ist besonders wichtig bei einer Verwendung des erfindungsgemäßen Filterelementes bei Kraftfahrzeugfiltern, in denen Kraftstoff oder Schmieröl zu filtern ist.

Ein nachfolgend beschriebenes Ausführungsbeispiel ist in der Zeichnung dargestellt.

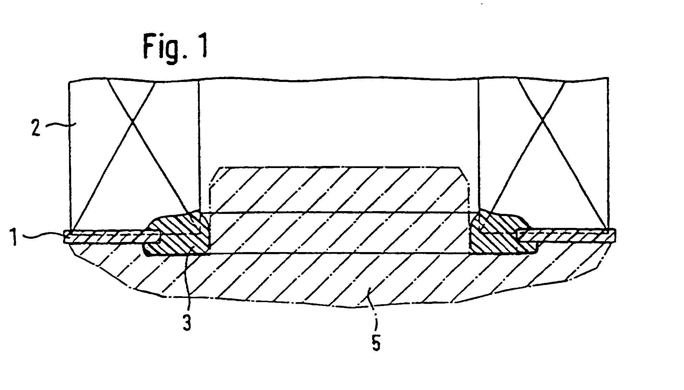

In dieser zeigt die einzige
- Fig. 1: einen Längsschnitt durch den Endscheibenbereich eines Ringfilters bei ausschnittsweiser Darstellung des Filtermaterials und einer strichpunktiert angedeuteten Herstellungsform.

Eine Endscheibe 1 aus Vlies ist dicht mit den Stirnkanten eines zick-zack-förmig gefalteten Filterbahnmaterials 2 verbunden. Das Filterbahnmaterial 2 kann aus Papier bestehen. Radial innen ist gleichzeitig an die Endscheibe 1 und das Filterbahnmaterial 2 elastisches Dichtmaterial 3 angeformt.

Die Endscheibe 1 steht radial innen gegenüber dem Innenumfang des Filterbahnmaterials 2 zurück, so daß das elastische Dichtmaterial 3 einen axial nicht von der Endscheibe 1 abgedeckten Bereich des Filterbahnmaterials 2 erfaßt. Das Material des elastischen Dichtmaterials 3 ist einerseits dicht mit dem Innenumfangsbereich der Endscheibe 1, die es auch axial übergreift und andererseits dicht mit dem angrenzenden Filterbahnmaterial 2 verbunden. In das gefaltete Filterbahnmaterial 2 ragt das elastische Dichtmaterial 3 hinein und umschließt den Innenumfangsbereich der Vlies-Endscheibe 1 geringfügig, wodurch eine garantiert feste und dichte Anbindung an das Filterbahnmaterial 2 gegeben ist.

Das elastische Dichtmaterial 3 kann beispielsweise aus Äthylen-Acrylat-Kautschuk (AEM) bestehen. AEM ist ein Material, das in einem ersten relativ verformbaren Ausgangszustand in dem vorgesehenen Bereich des Filterbahnmaterials 2 und der Endscheibe 1 eingebracht und dort durch Wärmezufuhr erweicht werden kann, um in dem Erweichungszustand zu einem elastischen, dauerwirksamen Dichtmaterial auszuhärten beziehungsweise zu vulkanisieren. In erweichtem Zustand ist das Dichtmaterial zumindest in einem solchen Maße fließfähig, daß es in das Filterbahnmaterial 2, das heißt speziell in die Faltenzwischenräume des Filterbahnmaterials 2, eindringen kann, um sodann in diesem Zustand auszuhärten beziehungsweise zu vulkanisieren.

Das vorgenannte Dichtungsmaterial ist im Vergleich zu ähnlichen anderen Dichtungsmaterialien für den erfindungsgemäßen Anwendungszweck besonders vorteilhaft. Deshalb umfaßt die vorliegende Erfindung auch Filterelemente, bei denen die Endscheibe aus einem anderen als Vliesmaterial besteht. Das Material der Endscheibe kann mit Bezug auf das erfindungsgemäße, elastische Dichtmaterial somit praktisch beliebiger Art sein. Zweckmäßigerweise wird die Endscheibe in diesen Fällen allerdings aus einem gegenüber dem elastischen Dichtmaterial weniger elastischen Material bestehen.

Ein Verfahren zum Anformen eines elastischen Dichmaterials 3 an gleichzeitig die Endscheibe 1 und das von der Endscheibe 1 gedichtete Filterbahnmaterial 2 kann nach beispielsweise dem nachstehend angegebenen Verfahren erfolgen.

In einem ersten Herstellungsschritt wird das zu einem Ring geformte, zick-zack-förmige Filterbahnmaterial 2 fest mit einer Vlies-Endscheibe 2 in an sich bekannter Weise verbunden. Die Endscheibe 1 läßt einen radial innen liegenden Stirnbereich des Filterbahnmaterials 2 unbedeckt. In diesem Zustand wird das Filterelement mit der Endscheibe 1 in eine Herstellungsform 5 eingelegt. Zuvor ist in diese Form 5 bereits ein Rohling als Basismaterial des elastischen Dichtmaterials 3 eingesetzt worden. Dieser aus dem Material EAM bestehende Rohling hat insgesamt Abmessungen, durch die ein Spiel gegenüber der Form 5, dem Filterbahnmaterial 2 sowie der Endscheibe 1 gegeben ist. In dem EAM befindet sich in an sich bekannter Weise ein Bläh- beziehungsweise Aufschäummittel, wodurch das Rohmaterial bei Wärmezufuhr aufschäumen kann. Um dieses Aufschäumen in der Herstellungsform 5 bei eingelegtem Filterelement erzielen zu können, wird die Form 5 erhitzt. Das Rohmaterial des elastischen Dichtmaterials 3 schäumt sodann in der Form 5 auf, in die die Gestalt des an dem fertigen Filterelement vorliegenden elastischen Dichtmaterials 3 eingearbeitet ist. Das aufschäumende Rohmaterial des elastischen Dichtmaterials 3 dringt strinseitig in die Falten des Filterbahnmaterials 2 ein und verbindet sich dabei dicht mit diesem Filterbahnmaterial. Die axiale Eindringtiefe des elastischen Dichtmaterials 3 in die Faltenräume des Filterelementes hängt von der voreinstellbaren Aufschäumkapazität des Rohmaterials ab.

Das elastische Dichtmaterial 3 umschließt an dem fertigen Filterelement auch einen geringen axialen Randbereich der Vlies-Endscheibe 1.

## Patentansprüche

1. Ringförmiges, radial durchströmbares Filterelement aus insbesondere zick-zack-förmig gefaltetem Bahnenmaterial als Filtermaterial mit einer ringförmigen Vlies-Endscheibe an mindestens einer Stirnseite des Filterelementes und einem radial innen- und/oder außen liegenden ringförmigen, elastischen Randbereich für ein dichtes Aufsetzen auf ein Anschlußteil,
**gekennzeichnet durch die Merkmale,**
- die Vlies-Endscheibe (1) erfaßt lediglich einen außerhalb des ringförmigen, elastischen Randbereiches liegenden Bereich,
- der von der Vlies-Endscheibe (1) nicht erfaßte, elastische Randbereich besteht aus einem elastischen, direkt und gleichzeitig an das Filtermaterial des Filterelementes einerseits sowie das mit diesem bereits fest verbundene Vlies der Endscheibe (1) andererseits angeschäumten Dichtmaterial (3).

2. Filterelement nach Anspruch 1,
**dadurch gekennzeichnet,**
**daß** das elastische Dichtmaterial (3) aus einem unter Temperatur aufweichbaren, in aufgeweichtem Zustand aushärtbaren Basismaterial besteht, das in ausgehärtetem Zustand elastische Eigenschaften besitzt.

3. Verfahren zur Herstellung eines Filterelementes nach Anspruch 2,
**dadurch gekennzeichnet,**
**daß** das zu dem elastischen Dichtmaterial (3) umzuformende Basismaterial in noch nicht ausgehärtetem Zustand aufgebracht, auf Erweichungstemperatur erwärmt und sodann ausgehärtet wird.

4. Verfahren nach Anspruch 3,
**dadurch gekennzeichnet,**
**daß** das Erweichen und Aushärten in einer das Basismaterial des elastischen Dichtmaterials (3) sowie die angrenzenden Filterelementbereiche einschließenden Form erfolgt.

## Claims

1. A ring-shaped filter element through which a medium flows radially, consisting of sheeting material as the filter material, pleated in a zigzag pattern in particular, with a ring-shaped nonwoven end disk on at least one end face of the filter element and a ring-shaped elastic edge area on the inside and/or outside radially for a tight connection to a connecting part,
**characterized by** the features
- the nonwoven end disk (1) includes only one area outside of the ring-shaped elastic edge area,
- the elastic edge area not covered by the nonwoven end disk (1) consists of an elastic sealing material (3) which is foamed directly and simultaneously onto the filter material of the filter element on the one. hand and the nonwoven of the end disk (1) which is already fixedly attached to the filter element on the other hand.

2. The filter element according to Claim 1,
**characterized in that** the elastic sealing material (3) consists of a base material which can be softened at a certain temperature and can be cured in the softened state and has elastic properties in the cured state.

3. A method of producing a filter element according to Claim 2,
**characterized in that** the base material to be shaped into the elastic sealing material (3) is applied in a not yet hardened state, then is heated to the softening point and next is cured.

4. The method according to Claim 3,
**characterized in that** the softening and curing are performed in a mold which encloses the base material of the elastic sealing material (3) and the adjacent filter element areas.

## Revendications

1. Élément filtrant annulaire, pouvant être traversé radialement, en un matériau en bande en particulier plié en zigzag en tant que matériau filtrant, comprenant un disque d'extrémité annulaire en non-tissé sur au moins un côté frontal de l'élément filtrant et une zone marginale élastique annulaire, située radialement à l'intérieur et/ou à l'extérieur, pour une pose hermétique sur un élément de raccordement,
**caractérisé par les particularités suivantes,**
- le disque d'extrémité (1) en non-tissé couvre uniquement une zone située à l'extérieur dé la zone marginale élastique annulaire,
- la zone marginale élastique non couverte par le disque d'extrémité (1) en non-tissé est constituée d'un matériau d'étanchéité (3) élastique, expansé directement et simultanément sur le matériau filtrant de l'élément filtrant, d'une part, ainsi que sur le non-tissé du disque d'extrémité (1) déjà assemblé fixement avec celui-ci, d'autre part.

2. Élément filtrant suivant la revendication 1,
**caractérisé en ce**
**que** le matériau d'étanchéité élastique (3) est constitué d'un matériau de base pouvant être ramolli par la température et durci à l'état ramolli, qui présente des propriétés élastiques à l'état durci.

3. Procédé de fabrication d'un élément filtrant suivant la revendication 2,
**caractérisé en ce**
**que** le matériau de base à transformer en matériau d'étanchéité élastique (3) est appliqué à l'état non encore durci, chauffé à la température de ramollissement puis durci.

4. Procédé suivant la revendication 3,
**caractérisé en ce**
**que** le ramollissement et le durcissement sont effectués dans un moule qui renferme le matériau de base du matériau d'étanchéité élastique (3) ainsi que les zones limitrophes de l'élément filtrant.
